(19) Europäisches Patentamt
European Patent Office
Office européen des brevets

(11) EP 4 336 442 A1

(12) EUROPEAN PATENT APPLICATION

(43) Date of publication:
**13.03.2024 Bulletin 2024/11**

(21) Application number: **22194886.2**

(22) Date of filing: **09.09.2022**

(51) International Patent Classification (IPC):
**G06T 7/00** (2017.01)

(52) Cooperative Patent Classification (CPC):
**G06T 7/0012;** G06T 2207/10072;
G06T 2207/20081; G06T 2207/20084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Guerbet
93420 Villepinte (FR)**
• **Institut Mines Telecom
91120 Palaiseau (FR)**

(72) Inventors:
• **VETIL, Rebeca
75020 Paris (FR)**

• **ABI-NADER, Clément
75012 Paris (FR)**
• **BÔNE, Alexandre
75009 Paris (FR)**
• **ROHÉ, Marc-Michel
92120 Montrouge (FR)**
• **GORI, Pietro
91123 Palaiseau (FR)**
• **BLOCH, Isabelle
91123 Palaiseau (FR)**

(74) Representative: **Plasseraud IP
66, rue de la Chaussée d'Antin
75440 Paris Cedex 09 (FR)**

(54) **METHOD FOR CHARACTERIZING AN ORGAN OF A PATIENT IN A MEDICAL IMAGE**

(57) The invention relates to a method implemented by computer means for characterizing at least one organ of a patient in at least one medical image, said method comprising the following iterative steps of:
segmenting (6) said organ in at least one image (7) representing a healthy organ, so as to obtain at least one segmentation mask (8) of said healthy organ,
generating additional segmentation masks of said healthy organ, using at least one data augmentation method (9) on the basis of the segmentation mask obtained in step (a), said data augmentation method (9) being a shape-preserving method,
training an autoencoder (10) with the segmentation mask obtained in step (a) and the additional segmentation masks obtained in step (b) to encode the shape of said organ in a latent space (11).

FIG. 2

EP 4 336 442 A1

**Description**

FIELD OF THE INVENTION

The present invention relates to a method implemented by computer means for characterizing at least one organ of a patient in at least one medical image.

BACKGROUND OF THE INVENTION

Anatomical alterations of organs such as the brain or the pancreas may be informative of functional impairments. For instance, hippocampal atrophy and pancreatic duct dilatation are well-known markers of Alzheimer's disease and pancreatic ductal adenocarcinoma. In these examples, quantifying anatomical differences bears therefore a great potential for determining the patient's clinical status, anticipating its future progression or regression, and supporting the treatment planning.

The computational anatomy literature proposed several Statistical Shape Modeling (SSM) approaches, which embed geometrical shapes into metric spaces where notions of distance and difference can be defined and quantified. Taking advantage of these representations, statistical shape models were then proposed to perform group analyses of shape collections.

In particular, atlas models learn geometrical distributions in terms of an "average" representative shape and associated variability, generalizing the Euclidean mean-variance analysis. In medical imaging, learning atlases from healthy examples allows for the definition of normative models for anatomical structures or organs, such as brain MRIs or subcortical regions segmented from neuroimaging data, thus providing a natural framework for the detection of abnormal anatomies.

In practice, leveraging an atlas model to compute the likelihood of a given shape to belong to the underlying distribution either requires to identify landmarks, or to solve a registration problem, which implies a computational cost for this shape embedding operation.

Alternative approaches proposed to drop topological hypotheses by relying on variations of a autoencoder or on a variational autoencoder to learn normative models that are subsequently used to perform Anomaly Detection (AD). These methods compress and reconstruct images of healthy subjects to capture a normative model of organs. These methods are usually applied on the raw imaging data, thus they entail the risk of extracting features related to the intensity distribution of a dataset which are not necessarily specific to the organ anatomy.

The present document makes it possible to address these drawbacks in whole or in part.

SUMMARY OF THE INVENTION

To that aim, the present document proposes a method implemented by computer means for characterizing at least one organ of a patient in at least one medical image, said method comprising the following iterative steps of:

(a) segmenting said organ in at least one image representing a healthy organ, so as to obtain at least one segmentation mask of said healthy organ,

(b) generating additional segmentation masks of said healthy organ, using at least one data augmentation method on the basis of the segmentation mask obtained in step (a), said data augmentation method being a shape-preserving method,

(c) training an autoencoder with the segmentation mask obtained in step (a) and the additional segmentation masks obtained in step (b) to encode the shape of said organ in a latent space.

In digital image processing and computer vision, image segmentation is a method aiming at partitioning a digital image into at least one segment or sets of pixels. More precisely, image segmentation is the process of assigning a label to every pixel or voxel in an image such that pixels with the same label share certain characteristics.

In the context of the present document, the result of step (a) is a set of pixels or voxels, also called segmentation mask, belonging to said organ.

Moreover, data augmentation is a set of techniques used to increase the amount of data by adding slightly modified copies of already existing data or newly created synthetic data from existing data.

In addition, an autoencoder is a type of artificial neural network used to learn efficient codings of unlabeled data (unsupervised learning). The autoencoder consists of two parts, an encoder, and a decoder. The encoder compresses the data from a higher-dimensional space to a lower-dimensional space (also called the latent space), while the decoder does the opposite i.e., convert the latent space back to higher-dimensional space. The decoder is used to ensure that latent space can capture most of the information from the dataset space, by forcing it to output what was fed as input to the encoder.

The method may comprise the following further iterative steps of:

(d) segmenting images representing healthy organs and images representing pathological organs, so as to obtain respectively segmentation masks of healthy and pathological organs,

(e) encoding said segmentation masks using the autoencoder trained in step (c), so as to obtain representations of healthy and pathological organs in the latent space.

The method may comprise the following further step:

(f) training a classifier able to classify representations of healthy and pathological organs in the latent space, by using at least part of said representations obtained in step (e) as a training set for the classifier.

In the context of the present document, classification is the problem of identifying which of a set of categories or classes an observation (here the encoded representations of organs) belongs to. Said classes may comprise a first class or healthy class and a second class or pathological class.

In such application, after such training, the method may comprise an inference phase comprising the following successive steps:

- segmenting an image representing an organ to characterize, so as to obtain a segmentation mask of said organ to characterize,
- encoding said segmentation mask with the autoencoder trained in step (c), so as to obtain a representation of said organ to characterize in the latent space,
- classify said representation with the classifier trained in step (f), so as to obtain the class of said representation,
- outputting said class.

Said application may be referred to a few-shot learning method.

In another application, the method may comprise the following further steps:

(f1) segmenting an image representing an organ to characterize, so as to obtain a segmentation mask of said organ to characterize,

(f2) encoding said segmentation mask with the autoencoder trained in step (c), so as to obtain a representation of said organ to characterize in the latent space,

(f3) calculating a distance in the latent space between the representation of said organ to characterize and a point representing a healthy organ.

Such distance provides information as to whether the pancreas is healthy or pathological.

Said application may be referred to as zero-shot learning method.

Said point may be the mean of the representation of healthy organs in the latent space.

Said distance may be the L2 or Euclidian distance.

In another application, the method may comprise the following further steps:

(g1) choosing at least one representation in the latent space,

(g2) using the autoencoder trained in step (c) to generate the segmentation mask of an organ by decoding said chosen representation,

(g3) outputting the generated segmentation mask.

In such application, the method may be used to reconstruct or generate segmentation mask of healthy, pathological or "in-between" organs. Such reconstructions can be used by physicians to visualize an organ in different states.

The chosen representation may be a representation chosen between an average of the representations of healthy organs and an average of the representations of pathological organs.

In particular, let us consider a set of healthy and pathological subjects or organs, as well as their segmentation masks. Based on the representations in the latent space of said masks, the average of the subject's latent projection for each group (healthy, pathological) may be computed, denoted by $z_{healthy}$ and $z_{pathological\ l}$, respectively.

We consider the line of equation $(1 -t).z_{healthy} + t.z_{pathological}$ with $t \in R$. When moving along this line with increasing values of t, we progress from a healthy mean latent shape representation to a pathological one, and can reconstruct the corresponding segmentation mask using the decoder part of the trained autoencoder.

The images may be 3D images.

The images may be CT-scan images, for example portal CT-scan images.

The image may be provided by other radiological modalities as MRI, PET/CT or PET/MR.

The organ may be a pancreas.

The autoencoder may be a Variational AutoEncoder.

The Variational AutoEncoder may be based on a UNet wherein skip connections are removed in order to comply with the Variational AutoEncoder framework.

The nnUNet (a known framework that reimplements the UNet) may be used to determine the topology of the UNet (number of layers, number of filters, filter sizes, etc...).

More particularly, the nnUNet framework automatically designs a pipeline based on a UNet architecture by relying on heuristics applied on the data that allow it to estimate key parameters. The dataset properties are estimated to automatically perform a pre-processing step. This is followed by the automatic definition of design choices for the model (number of layers, convolutional kernel sizes, convolutional blocks, etc...). A training procedure is also implemented (scheduled learning rate, etc...).

An implementation of the nnUnet framework may be found at the following link at the date of filling of the present application: https://github.com/MIC-DKFZ/nnUNet.

The classifier may be a Support Vector Machine classifier.

Said shape-preserving data augmentation method may implement at least one random translation, rotation and/or scaling of the segmentation mask.

The present document also proposes a computer software, comprising instructions to implement at least a part of the method according to any of the preceding claims when the software is executed by a processor.

The present document also proposes a computer device comprising:

- an input interface to receive medical images,

- a memory for storing at least instructions of a computer program according to preceding claims,

- a processor accessing to the memory for reading the aforesaid instructions and executing then the method according to the present document.

The computer device may also comprise an output interface to provide an output of said method.

The present document also proposes a computer-readable non-transient recording medium on which a computer software is registered to implement the method according to the present document, when the computer software is executed by a processor.

BRIEF DESCRIPTION OF THE DRAWINGS

Other features, details and advantages will be shown in the following detailed description and on the figures, on which:

- figure 1 schematically shows an example of a computer device according to the present document,
- figure 2 shows the pipeline of an application of the method according to the present document,
- figure 3 shows the pipeline of another application of the method according to the present document.
- figure 4 shows the architecture of the autoencoder model,
- figure 5 shows examples of normal and abnormal pancreas shapes,
- figure 6 shows a 2D reduction of the latent representation of the test subjects.

The annexed drawing includes meaningful colors. Although the present application is to be published in black and white, a colored version of the annexed drawing was filed before the European Patent Office.

DETAILED DESCRIPTION OF A PREFERRED EMBODIMENT

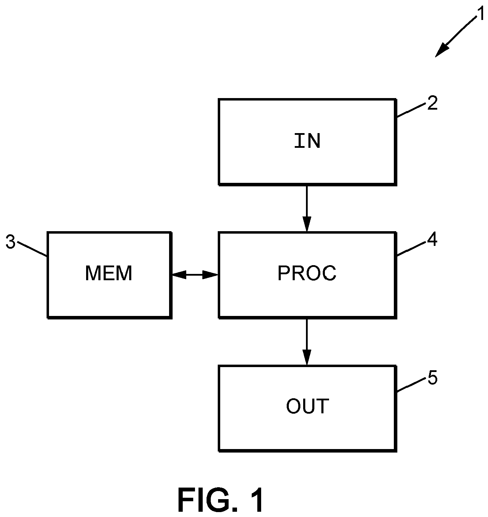

Figure 1 schematically shows an example of a computer device 1 according to the invention. Said computer device 1 comprises:

- an input interface 2,

- a memory 3 for storing at least instructions of a computer program,

- a processor 4 accessing to the memory 3 for reading the aforesaid instructions and executing the method according to the present document,

- an output interface 5.

## GENERAL PIPELINE

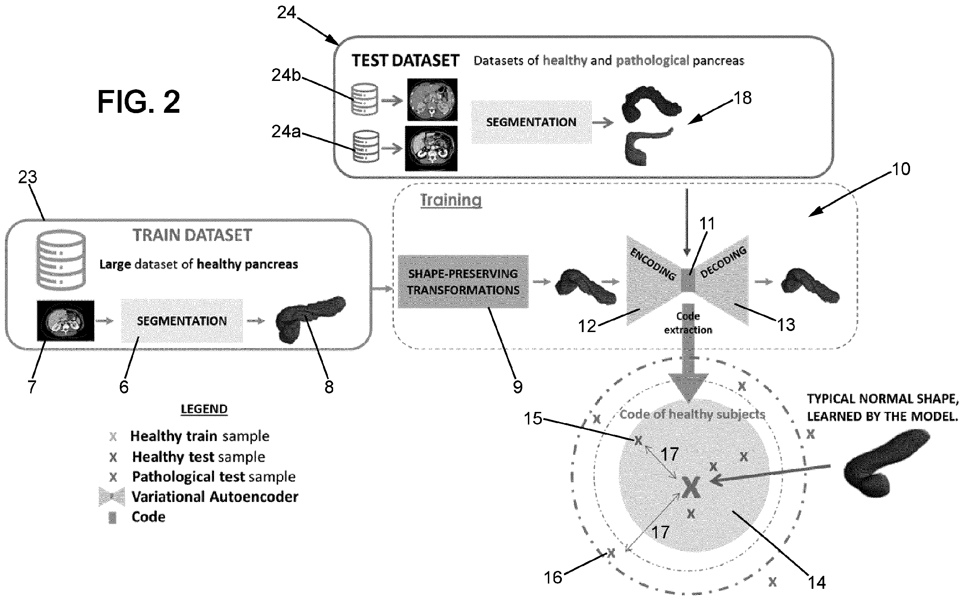

The present document proposes a method illustrated in figure 2 and implemented by computer means for characterizing at least one organ of a patient (for example a pancreas) in at least one medical image, said method comprising the following iterative steps of:

(a) segmenting 6 said organ in at least one image 7 representing a healthy organ, so as to obtain at least one segmentation mask 8 of said healthy organ,

(b) generating additional segmentation masks of said healthy organ, using at least one data augmentation method 9 on the basis of the segmentation mask obtained in step (a), said data augmentation method being a shape-preserving method,

(c) training an autoencoder 10 with the segmentation mask obtained in step (a) and the additional segmentation masks obtained in step (b) to encode the shape of said organ in a latent space 11.

Said autoencoder 10 comprising an encoder 12 and a decoder 13.
Such pipeline is described below in more details.

## METHODS

### Modelling organ shape

We consider an image acquired via a standard imaging technique. For a given organ in the image, its anatomy can be represented by a binary segmentation mask with X = [$x_i$, i = 1 ... $d$} with $x_i \in \{0,1\}$ and d the number of voxels in the image. The method aims to study the shape of this organ, and assume it is characterized by a set of underlying properties that can be extracted from the segmentation mask. Therefore, we hypothesize the following generative process for the segmentation mask:

$$p_\theta(X \mid z) = \prod_{i=1}^{d} \{f_\theta(z)\}_i^{x_i} (1 - f_\theta(z)_i)^{1-x_i}$$

where $0^0 = 1$ by convention, and z is a latent variable generated from a prior distribution p(z). This latent variable provides a low-dimensional representation of the segmentation mask embedding its main shape features. The function $f_\theta$ is a non-linear function mapping z to a predicted probabilistic segmentation mask.

In one aspect, there is interest to infer the parameters $\theta$ of the generative process, as well as to approximate the posterior distribution of the latent variable z given a segmentation mask X. Said method relies on the variational autoencoder (VAE) framework (Kingma, D.P., Welling, M.: Auto-Encoding Variational Bayes. In: 2nd International Conference on Learning Representations, ICLR 2014, Banff, AB, Canada (2014)) to estimate the model parameters. Hence, p(z) is defined as a multivariate Gaussian with zero mean and identity covariance. The approximate posterior distribution $q_\phi(z \mid X)$ parameterized by $\phi$ is also introduced, and a lower bound $\mathcal{L}$ of the marginal log-likelihood is optimized, which can be written for the segmentation mask $X^p$ of a subject p as:

$$\mathcal{L} = E_{q_\phi(z|X^p)}[\log p_\theta(X^p \mid z)] - \mathrm{KL}[q_\phi(z \mid X^p) \mid p(z)],$$

where $q_\phi(z \mid X^p)$ follows a Gaussian distribution $\mathcal{N}\left(\mu_\phi(X^p), \sigma_\phi^2(X^p)I\right)$ with I the identity matrix, and KL is the Kullback-Leibler divergence.

To capture shape features, the method relies on a convolutional network and adopts the U-Net encoder-decoder architecture without skip connections between the encoder and the decoder. The U-Net architecture is disclosed in the following article: Ronneberger, O., Fischer, P., Brox, T.: U-Net: Convolutional networks for biomedical image segmentation. In: International Conference on Medical Image Computing and Computer-Assisted Intervention. pp. 234-241. Springer (2015).

In practice, the number of convolutional layers and the convolutional blocks are automatically inferred from the nnUNet self-configuring procedure. Such nnUnet framework is disclosed in the following article: Isensee, F., et al.: nnU-Net: a self-configuring method for deep learning-based biomedical image segmentation. Nature Methods 18(2), 203-211 (2021).

Due to this encoder-decoder architecture, the segmentation masks are progressively down-sampled to obtain low-resolution feature maps which are mapped through a linear transformation to the latent variable z. The latent code is subsequently decoded by a symmetric path to reconstruct the original masks.

## Anomaly detection (AD)

The method proposes to learn a normative model of organ shapes by applying the VAE framework previously presented on the segmentation masks of a large cohort of N healthy patients, allowing the model to capture a low-dimensional embedding characteristic of a normal organ anatomy in the latent space. In addition, as mentioned above, a data augmentation is applied, with such procedure consisting of random translations, rotations and scalings, in order to be invariant to these transformations and force the network to extract shape features. Based on this learned model, the method proposes two approaches to perform Anomaly Detection (AD) by leveraging the latent representation of normal organ shapes.

## Zero-shot learning method

After training, the recognition model $q_\phi(z \mid X)$ may be used to project the segmentation maps $X^p$ of the cohort of healthy subjects and obtain an empirical distribution of normal shapes (reference 14 in figure 2) in the latent space 11. The method relies on this low-dimensional distribution of normality to detect abnormal shapes.

To do so, the mean of the healthy subjects' projection 15 is computed, and abnormality of a representation 16 in the latent space is defined through the L2 distance 17 to this mean latent representation.

## Few-shot learning method

Another approach is to classify normal or healthy shapes and abnormal or pathological shapes based on their low-dimensional representations 15, 16. In practice, the segmentation maps from a set of healthy and pathological subjects in the latent space using are projected using the recognition model $q_\phi(z \mid X)$. Therefore, a set of low-dimensional organ shape features is obtained for all these subjects, such set being used to learn any type of classifier (e.g., linear SVM).

## Studying organ shapes differences

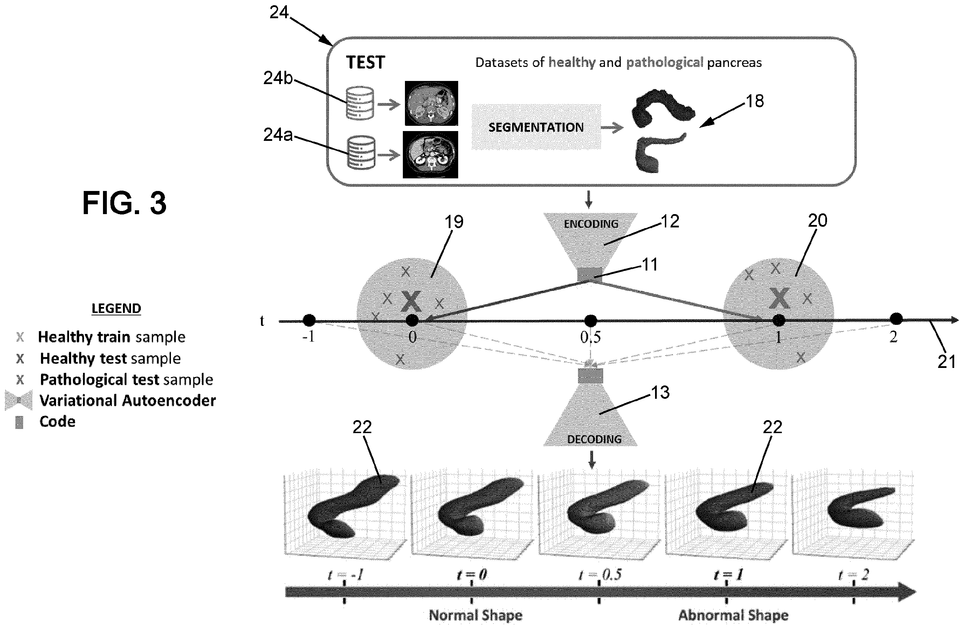

As shown in figure 3, such framework can also be used to study organ differences between groups. In one example, a set of healthy and pathological subjects, as well as their segmentation masks 18 is considered. Based on the recognition model $q_\phi(z \mid X)$, the average of the subjects' latent projection can be computed for each group 19, 20, denoted by $z_{healthy}$ and $z_{pathological}$, respectively. Line 21 is represented by the equation $(1 - t) \times z_{healthy} + t \times z_{pathological}$ with $t \in \mathbb{R}$. When moving along this line 21 with increasing values of $t$, it progresses from a healthy or normal mean latent shape representation (blue group) to a pathological or abnormal one (red group) and can reconstruct the corresponding segmentation mask 22 using the probabilistic decoder $p_\theta(X \mid z)$, said decoder being designated by the reference 13 in figure 3.

## EXPERIMENTS

In this section, the method is applied in the case of the pancreas. A normative model of pancreas shape was learned on a large cohort of healthy subjects, and was then leveraged for anomaly detection (AD) on an independent test cohort. Several configurations were proposed to assess the model performances, including the impact of the number of training subjects and of the latent space dimensionality on the AD performances. Detection with the few-shot learning method (i.e., making predictions based on a limited number of samples) was performed using Support Vector Machine (SVM). Finally, it is shown how the proposed framework is used to visualize differences between the healthy and pathological pancreas.

Train data

The training dataset $\mathcal{D}^{Train}$ (reference 23 in figure 2) was created from a private cohort containing 2606 abdominal Portal CT scans of patients with potential liver cancer. To ensure the healthy condition and shape of the pancreas, several exclusion criteria were applied (see below section). Finally, 1200 portal CT scans were retained. To explore the influence of the number of samples seen during training, subsets $\mathcal{D}_N$ with a growing number of subjects were created (see Table 1 below). For each $\mathcal{D}_N$, 80 % and 20 % of the samples were used for training and validation, respectively. Splitting was done such that the pancreas volume distribution was balanced across the splits.

Inclusion criteria

The training data were selected from a dataset consisting of 2606 portal phase abdominal CT scans acquired from patients with potential liver disease. Each scan was accompanied by a radiological report as well as segmentations of the liver and liver lesions, done manually by radiologists. In order to exclude any patient whose condition could affect the pancreas, different exclusion criteria were applied. First, all patients with metastatic cancer or lesions reported as "unevaluable" (or unevaluatable) were excluded. Secondly, in order to avoid overly large liver lesions, patients with lesion volumes exceeding the 99th percentile were also excluded. Thirdly, cases in which lesions protruded from the liver were also removed from the study. Finally, the pancreas segmentation masks were automatically generated for the remaining patients, and only the cases for which the mask consisted of one single connected component were retained, this last criterion acting as a quality control on the segmentation masks. In the end, 1200 cases were retained to build the healthy pancreas database for training. TABLE 1- Individual splits of the different training sets $\mathcal{D}_N$, as well as their corresponding inclusion criteria.

| Name | $N_{tot}$ | $N_{train}$ | $N_{val}$ | Liver lesion | | | Other abdominal pathology |
| | | | | Benign | Non suspicious | Suspicious | |
|---|---|---|---|---|---|---|---|
| **D₃₀₀** | 300 | 240 | 60 | ✓ | ✗ | ✗ | ✗ |
| **D₆₀₀** | 600 | 480 | 120 | ✓ | ✓ | ✗ | ✗ |
| **D₉₀₀** | 900 | 720 | 180 | ✓ | ✓ | ✓ | ✗ |
| **D₁₂₀₀** | 1200 | 960 | 240 | ✓ | ✓ | ✓ | ✓ |

Test data

The test database $\mathcal{D}^{Test}$ (reference 24 in figure 2) was obtained by combining two datasets:

i) a private dataset $\mathcal{D}^{Test}_{abnormal}$ containing 144 cases diagnosed with pancreatic cancer (reference 24a), and for whom the pancreas shape was evaluated as abnormal by an expert radiologist;

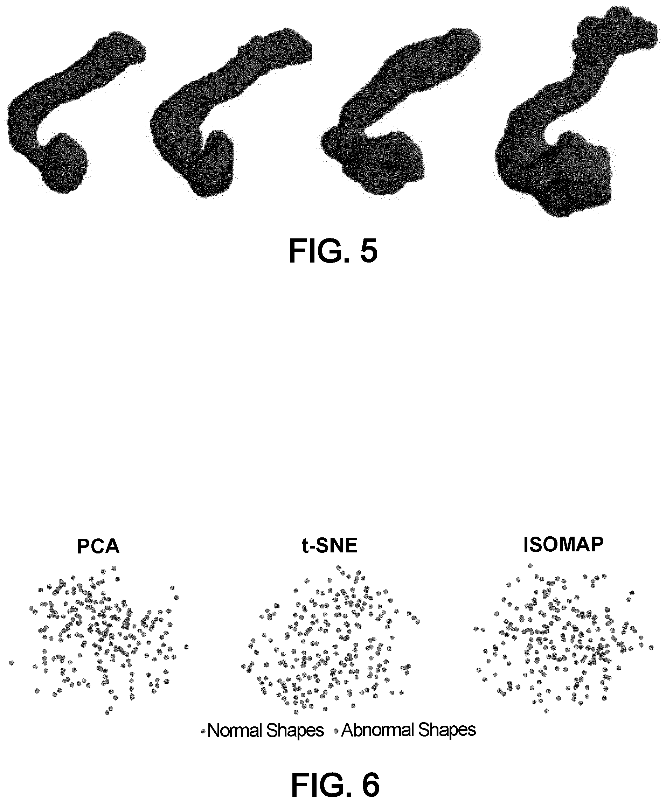

ii) ii) a public dataset $\mathcal{D}^{Test}_{normal}$ (reference 24b), from The Cancer Imaging Archive (TCIA) containing 80 CT scans of patients who neither had abdominal pathologies nor pancreatic lesions, and for whom the assumption of normal pancreas shape held. Centers, machines and protocols differed among the three datasets. Examples of normal and abnormal shapes can be seen in figure 5.

More particularly, figure 5 shows examples of normal and abnormal pancreas shapes from $\mathcal{D}^{Test}$. Green and red figures are examples taken from $\mathcal{D}^{Test}_{normal}$ and $\mathcal{D}^{Test}_{abnormal}$, respectively.

## Preprocessing

The first step consisted in obtaining the pancreas segmentation masks. For the public dataset $\mathcal{D}_{normal}^{Test}$, the reference pancreas segmentation masks provided by TCIA are used. For $\mathcal{D}_{normal}^{Train}$ and $\mathcal{D}_{abnormal}^{Test}$, the masks were obtained semi-automatically using an in-house segmentation algorithm derived from the nnUNet, and validated by a radiologist with 25 years of expertise in abdominal imaging. Finally, all the masks were resampled to $1 \times 1 \times 2$ mm$^3$ in $(x,y,z)$ directions, and centered in a volume of size $192 \times 128 \times 64$ voxels.

## Architecture of the autoencoder

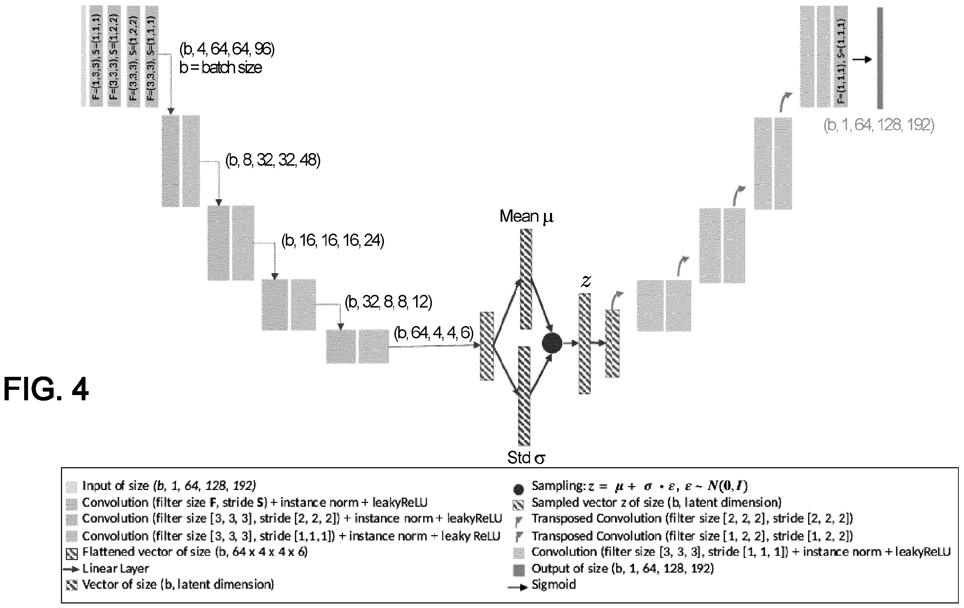

As shown in Figure 4, the proposed autoencoder is a variational autoencoder (VAE) following a 3D encoder-decoder architecture. The network topology (number of convolutions per block, filter sizes) was chosen based on the nnUNet self-configuring procedure. Thanks to stacked convolutions and pooling operations, the network first encodes the 3D input into a 1D-vector, also called latent representation. Then, transposed convolutions decode the latent representation to produce an output of same size than the input.

## Implementation details

The model was trained on 800 epochs. The Stochastic Gradient Descent optimizer was used with an initial learning rate of 10-4 following a polynomial decay. To avoid memory issues and mimic larger batch sizes, better suited for VAEs, a batch size of 8 was used with a gradient accumulation step of 5.

## RESULTS

## Zero-shot Anomaly Detection (AD)

The model was trained on the different datasets $\mathcal{D}_{\mathcal{N}}^{Train}$, with a growing number of latent dimensions $L$ ranging from 16 to 1024 (denoted by $L_{16} \ldots L_{1024}$). For each experiment, the zero-shot AD procedure was applied, as previously explained, on $\mathcal{D}^{Test}$. The Area Under the Curve (AUC) is reported in % in Table 2.

Increasing the dimension of the latent space $L$ improved the classification performances on each dataset $\mathcal{D}_{\mathcal{N}}$. Moreover, for each dataset size the best result was consistently obtained when $L$ was set at the maximum value $L_{1024}$. The effect of the latent space dimension on the performances appers to attenuate as the dataset size increased and when going from $L_{16} to L_{1024}$, the mean AUC for $\mathcal{D}^{300}, \mathcal{D}^{600}, \mathcal{D}^{900}, \mathcal{D}^{1200}$ is observed to improve by 10.7, 5.9, 4.0 and 3.1 points, respectively. Regarding the effect of the database size, it was observed that increasing the training set size appears to globally improve the AUC scores. For instance, going from $\mathcal{D}^{300}$ to $\mathcal{D}^{600}$ increased the classification performances for all the experiments, particularly for $L_{16}$ which gained 9.3 points.

This beneficial effect of both larger training sets and latent dimension was also observed on the Dice score between the original and reconstructed segmentation masks. Thus, for the following experiments, the model trained on $\mathcal{D}^{1200}$ with a latent dimension $L_{1024}$ was chosen as it gave the best results in terms of AUC and Dice scores.

Table 2 - Results for zero-shot AD.

|  | $L_{16}$ | $L_{64}$ | $L_{256}$ | $L_{1024}$ |
|---|---|---|---|---|
| $D_{300}$ | $51.51 \pm 0.37$ | $59.08 \pm 0.37$ | $62.16 \pm 0.37$ | $62.17 \pm 0.37$ |
| $D_{600}$ | $59.24 \pm 0.38$ | $60.97 \pm 0.36$ | $\mathbf{64.32 \pm 0.36}$ | $65.11 \pm 0.36$ |
| $D_{900}$ | $60.77 \pm 0.37$ | $\mathbf{62.64 \pm 0.37}$ | $64.04 \pm 0.36$ | $64.81 \pm 0.36$ |
| $D_{1200}$ | $\mathbf{62.28 \pm 0.36}$ | $61.74 \pm 0.37$ | $62.58 \pm 0.37$ | $\mathbf{65.41 \pm 0.36}$ |

For each experiment, corresponding to a specific training size $\mathcal{D}$ and latent space dimension $L$, the mean and standard deviation of AUC scores are reported in %, obtained by bootstrapping with 10000 repetitions. Best results by line are underlined by column are in bold.

To visualize the separation between normal and abnormal shapes, each subject from $\mathcal{D}^{test}$ was projected using the recognition model $q_\phi(z|X)$. Based on the subjects' latent representation, three dimensionality reduction techniques were applied, namely Principal Components Analysis (PCA), t-distributed Stochastic Neighbor Embedding (t-SNE) and Isomap. Results are displayed in figure 6, on which each point represents the latent projection of a test subject reduced on a 2D plane. It has been observed that, independently of the projection technique, normal and abnormal shapes tended to be separated in two different clusters.

More particularly, figure 6 shows the 2D reduction of the latent representation of the test subjects. The 80 samples from $\mathcal{D}^{Test}_{normal}$ are in green, and the 144 samples from $\mathcal{D}^{Test}_{abnormal}$ are in red.

Few-shot AD

A linear support vector machine (SVM) classifier was trained on the latent representation of $\mathcal{D}^{Test}$ with stratified k-fold cross-validation. The number $k$ of folds was varied to test the performances of the classifier depending on the train/test samples ratio. Experiments ranged from a 0.05 train/test ratio to a leave-one-out cross-validation and are presented in Table 3. Using only 8 healthy and 15 abnormal training samples increased the performance to 78.9 %. Additionally, the AUC scores and the balanced accuracy were observed to increase with the number of training samples, reaching a maximum of 91.1 % and 83.2 % respectively in the leave-one-out configuration.

Table 3 - Results for few-shot AD

| Train/Test ratio *Number of training samples* | 0.05 *12 (8)* | 0.11 *23 (15)* | 0.25 *45 (29)* | 1 *112 (72)* | 223 *223 (144)* |
|---|---|---|---|---|---|
| **AUC** | 66.02 ± 0.02 | 78.97 ± 0.03 | 81.87 ± 0.07 | 86.95 ± 0.23 | 91.18 ± 0.19 |
| **Balanced Accuracy** | 67.78 ± 0.03 | 70.88 ± 0.05 | 73.96 ± 0.10 | 75.49 ± 0.37 | 83.26 ± 0.34 |

For each experiment, the number of training samples is indicated, as well as the number of abnormal samples (in brackets). The means and standard deviations for AUC (Area Under the Curve, in %) and balanced accuracy (in %) were obtained by bootstrapping with 10000 repetitions.

Studying pancreas shapes differences between groups

To model differences in the pancreas shape between healthy and pathological groups, the procedure presented previously was applied on the subjects from $\mathcal{D}^{Test}_{normal}$ and $\mathcal{D}^{Test}_{abnormal}$. Figure 3 shows the pancreas shapes obtained for different values of $t$. When going from a healthy towards a pathological latent representation, a shrinkage of the shape in the body for the generated pancreas is observed.

Such framework may thus be used to study and visualize the morphological differences between the organ shape of different clinical groups, based on an exploration of the latent space. The anatomical changes may concur with clinical evidence as the shrinkage suggests partial parenchymal atrophy.

Reconstruction results

As an additional indicator for the good reconstruction capacity of the proposed model, in Table 4, the Dice scores computed between the input and output of the VAE for the 244 subjects of $\mathcal{D}^{Test}$ are also reported. The Dice score is a common metric used to gauge the similarity of two samples. Here, it evaluates the overlap between the input segmentation mask and its reconstruction. Dice scores range from 0 (no overlap) to 100% (perfect match). As for the AUC scores obtained in zero-shot AD, the Dice scores increased with larger latent space dimensions and larger training sets. In particular, best reconstruction performances coincided with the best detection performances, obtained on the model trained on $\mathcal{D}_{1200}$ with a latent dimension $L$ = 1024.

Table 4 - Results for segmentation masks reconstruction

|  | $L_{16}$ | $L_{64}$ | $L_{256}$ | $L_{1024}$ |
|---|---|---|---|---|
| $D_{300}$ | 73.7 ± 7.2 | 79.9 ± 5.7 | 80.9 ± 7.4 | 81.5 ± 7.4 |
| $D_{600}$ | 75.5 ± 7.5 | 83.4 ± 5.4 | 85.0 ± 5.8 | 83.9 ± 5.9 |
| $D_{900}$ | **78.1 ± 5.9** | 85.0 ± 5.8 | 86.1 ± 5.4 | 85.4 ± 5.8 |
| $D_{1200}$ | 77.3 ± 6.4 | **85.9 ± 5.4** | **86.2 ± 5.3** | 88.5 ± 4.4 |

For each experiment, corresponding to a specific training size and latent space dimension, the mean and standard deviation of Dice scores obtained by bootstrapping with 10000 repetitions are reported. Best results by line are underlined and by column are in bold.

COMPARISON WITH OTHER METHODS

Comparison with a baseline method

The method according to the present document was compared with a baseline method classifying shapes based on their volume. This method was applied on $\mathcal{D}^{Test}$ with bootstrap sampling and obtained an average AUC of 51 % with a 95 % confidence interval of [49.9; 51.7], below the maximum AUC scores of 65.4 % and 91.1 % previously reported in the zero-shot and few-shot cases, respectively.

Comparison with other SSM methods

The method according to the present document was also compared with two state-of-the-art methods: active shape models (ASM) and Large Deformation Diffeomorphic Metric Mapping (LDDMM) using the Deformetrica software.
Details and results, reported in the section below, show that said method outperforms these two state-of-the-art methods in both zero and few-shot configurations.
Concerning ASM, the signed distance map of the pancreas 3D contours was computed of each subject. For LDDMM, a Bayesian Atlas parametrized by 576 control points was estimated. In both cases, a PCA was performed on the shape-encoding parameters to obtain a latent vector of dimension 1024 for each subject. We compared them with the method according to the present document also using a latent dimension $L$ = 1024. All methods were trained on $\mathcal{D}_{1200}$. Results, reported in Table 5, show that said method outperforms ASM and LDMM when the number of training samples is small (Train/Test ratio ≤ 0.05).

Table 5 - Few-shot and zero-shot AD results

| Configuration | Zero-shot | Few-Shot | | |
|---|---|---|---|---|
| Train/Test ratio | 0 | 0.05 | 1 | 223 |
| Ours | 65.41 ± 0.36 | 66.02 ± 0.02 | 86.95 ± 0.23 | 91.18 ± 0.19 |
| LDDMM | 54.60 ± 0.36 | 58.68 ± 0.02 | 89.43 ± 0.19 | 95.41 ± 0.11 |
| ASM | 58.42 ± 0.36 | 61.1 ± 0.02 | 82.64 ± 0.26 | 93.79 ± 0.14 |

For each experiment, the mean and standard deviation for AUC (in %) was reported, obtained by bootstrapping with 10000 repetitions. Best results by column are in bold.

**Claims**

1. A method implemented by computer means for characterizing at least one organ of a patient in at least one medical image, said method comprising the following iterative steps of:

(a) segmenting (6) said organ in at least one image (7) representing a healthy organ, so as to obtain at least one segmentation mask (8) of said healthy organ,
(b) generating additional segmentation masks of said healthy organ, using at least one data augmentation method (9) on the basis of the segmentation mask obtained in step (a), said data augmentation method (9) being a shape-preserving method,

(c) training an autoencoder (10) with the segmentation mask obtained in step (a) and the additional segmentation masks obtained in step (b) to encode the shape of said organ in a latent space (11).

2. The method according to the preceding claim, comprising the following further iterative steps of:

(d) segmenting images representing healthy organs (24b) and images representing pathological organs (24a), so as to obtain respectively segmentation masks (18) of healthy and pathological organs,

(e) encoding said segmentation masks using the autoencoder (10) trained in step (c), so as to obtain representations (15, 16) of healthy and pathological organs in the latent space (11).

3. The method according to the preceding claim, comprising the following further step:

(f) training a classifier able to classify representations of healthy and pathological organs in the latent space, by using at least part of said representations (15, 16) obtained in step (e) as a training set for the classifier.

4. The method according to claim 2, comprising the following further steps:

(f1) segmenting an image representing an organ to characterize, so as to obtain a segmentation mask of said organ to characterize,

(f2) encoding said segmentation mask with the autoencoder trained in step (c), so as to obtain a representation of said organ to characterize in the latent space,

(f3) calculating a distance (17) in the latent space between the representation of said organ to characterize and a point representing a healthy organ.

5. The method according to the preceding claim, wherein said point is the mean of the representation of healthy organs in the latent space.

6. The method according to claim 4 or 5, wherein said distance is the L2 or Euclidian distance.

7. The method according to claim 2, comprising the following further steps:

(g1) choosing at least one representation in the latent space,

(g2) using the autoencoder trained in step (c) to generate the segmentation mask (22) of an organ by decoding said chosen representation,

(g3) outputting the generated segmentation mask.

8. The method according to the preceding claim, wherein the chosen representation is a representation chosen between an average of the representations of healthy organs (19) and an average of the representations of pathological organs (20).

9. The method according to any of the preceding claims, wherein the images are 3D images.

10. The method according to any of the preceding claims, wherein the images are CT-scan images.

11. The method according to any of the preceding claims, wherein the organ is a pancreas.

12. The method according to any of the preceding claims, wherein the autoencoder (10) is a Variational AutoEncoder.

13. The method according to the preceding claim, wherein the Variational AutoEncoder network is based on a UNet wherein skip connections are removed in order to comply with the Variational AutoEncoder framework.

14. The method according to any of the preceding claims, wherein the classifier is a Support Vector Machine classifier.

15. The method according to any of the preceding claims, wherein said shape-preserving data augmentation method (9) implements at least one random translation, rotation and/or scaling of the segmentation mask.

FIG. 1

**FIG. 2**

**FIG. 3**

LEGEND

X  **Healthy train** sample
X  **Healthy test** sample
X  **Pathological test** sample
▨  **Variational Autoencoder**
▪  **Code**

FIG. 4

FIG. 5

PCA    t-SNE    ISOMAP

• Normal Shapes • Abnormal Shapes

FIG. 6

# EP 4 336 442 A1

European Patent Office

## EUROPEAN SEARCH REPORT

Application Number

EP 22 19 4886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ASTARAKI MEHDI ET AL: "Prior-aware autoencoders for lung pathology segmentation", MEDICAL IMAGE ANALYSIS, OXFORD UNIVERSITY PRESS, OXOFRD, GB, vol. 80, 25 May 2022 (2022-05-25), XP087123346, ISSN: 1361-8415, DOI: 10.1016/J.MEDIA.2022.102491 [retrieved on 2022-05-25] | 1,2,4,6, 7,9-15 | INV. G06T7/00 |
| Y | * the whole document * | 3 | |
| A | | 5,8 | |
| | ----- | | |
| Y | US 2022/076053 A1 (GULSUN MEHMET AKIF [US] ET AL) 10 March 2022 (2022-03-10) * paragraph [0047] * | 3 | |
| | ----- | | |

**TECHNICAL FIELDS SEARCHED (IPC)**

G06T

The present search report has been drawn up for all claims

| Place of search | Date of completion of the search | Examiner |
|---|---|---|
| Munich | 28 February 2023 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 4886

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2023

| Patent document cited in search report | Publication date | Patent family member(s) | Publication date |
|---|---|---|---|
| US 2022076053 A1 | 10-03-2022 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- U-Net: Convolutional networks for biomedical image segmentation. **RONNEBERGER, O. ; FISCHER, P. ; BROX, T.** International Conference on Medical Image Computing and Computer-Assisted Intervention. Springer, 2015, 234-241

- **ISENSEE, F. et al.** nnU-Net: a self-configuring method for deep learning-based biomedical image segmentation. *Nature Methods,* 2021, vol. 18 (2), 203-211